# EUROPEAN PATENT APPLICATION

(11) **EP 4 642 017 A1**
(43) Date of publication of application: **29.10.2025**
(21) Application number: 24747502.3
(22) Date of filing: 26.01.2024
(51) Int. Cl.: H04M 1/72454, H04M 1/02, G06F 3/041, G06F 3/0484, G06F 3/0481

(54) **ELECTRONIC DEVICE COMPRISING FLEXIBLE DISPLAY AND METHOD FOR IDENTIFYING FOLDED STATE OR UNFOLDED STATE**

(30) Priority: 27.01.2023 KR 20230011152; 22.03.2023 KR 20230037219
(71) Applicant: Samsung Electronics Co., Ltd., Suwon-si, Gyeonggi-do 16677 (KR)
(72) Inventor: PARK, Jongdae, Suwon-si, Gyeonggi-do 16677 (KR); KIM, Euijin, Suwon-si, Gyeonggi-do 16677 (KR); PARK, Jaehyung, Suwon-si, Gyeonggi-do 16677 (KR); YOO, Daehyun, Suwon-si, Gyeonggi-do 16677 (KR); HONG, Sungwon, Suwon-si, Gyeonggi-do 16677 (KR)
(74) Representative: Gulde & Partner
(86) International application number: PCT/KR2024/095060
(87) International publication number: WO 2024/158269

(57) **Abstract**

An electronic device comprising a flexible display according to an embodiment of the present disclosure may comprise: a first housing connected to a hinge device, the first housing comprising a first surface facing in a first direction; a second housing comprising a second surface facing in a second direction, the second housing being folded onto the first housing around the hinge device; a flexible display extending from the first surface to the second surface so as to form the first and second surfaces, the flexible display comprising a touch panel; a first reception channel and a first transmission channel corresponding to the touch panel disposed on the first surface; a second reception channel and a second transmission channel corresponding to the touch panel disposed on the second surface; a memory for storing instructions; and a processor. The instructions, when executed by the processor, may cause the electronic device to: control the electronic device so as to operate in an unfolded state; control the electronic device so as to change the first reception channel to a transmission channel at a designated cycle; identify the capacitance between the first and second surfaces on the basis of the changed transmission channel and the second reception channel; and control the electronic device so as to operate in a folded mode if the capacitance between the first and second surfaces is larger than or equal to a designated capacitance.

## Description

### [Technical Field]

The disclosure relates to an electronic device including a flexible display and a method for identifying a folded state or an unfolded state.

### [Background Art]

Electronic devices are gradually becoming slimmer, while rigidity and design aspects thereof are being enhanced. At the same time, such electronic devices are being improved to differentiate their functional elements. Such electronic devices are moving away from a uniform rectangular shape and gradually transforming into various forms. These electronic devices may have a transformable structure that allows convenient portability while enabling the use of a display having a large screen.

For example, an electronic device may include foldable housings which operate in a manner of being folded or unfolded with respect to each other. The electronic device may include a flexible display in the foldable housings, thereby enhancing portability while providing a large screen to a user. The electronic device including the foldable housings may determine a folded or unfolded state of the housings by using a Hall sensor.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

When a metal or a magnet is adjacent to a Hall sensor, an electronic device may incorrectly recognize a folded or unfolded state of foldable housings due to a malfunction of the Hall sensor.

An electronic device including a flexible display and a method for identifying a folded state or an unfolded state according to an embodiment of the disclosure may determine a folded state and/or an unfolded state of the electronic device by using the flexible display.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

An electronic device including a flexible display according to an embodiment of the disclosure may include: a first housing connected to a hinge structure and including a first surface facing in a first direction; and a second housing including a second surface facing in a second direction and configured to be folded toward the first housing about the hinge structure.

The electronic device including the flexible display according to an embodiment of the disclosure may include: the flexible display extending from the first surface to the second surface to form the first surface and the second surface, and including a touch panel; a first reception channel and a first transmission channel corresponding to the touch panel disposed on the first surface; a second reception channel and a second transmission channel corresponding to the touch panel disposed on the second surface; and a processor.

The processor according to an embodiment of the disclosure may control the electronic device to operate in an unfolded state, control the first reception channel to be changed into a transmission channel at a designated cycle, identify a capacitance between the first surface and the second surface, based on the changed transmission channel and the second reception channel, and when the capacitance between the first surface and the second surface is greater than or equal to a designated capacitance, control the electronic device to operate in a folded state.

A method for identifying a folded state or an unfolded state of an electronic device according to an embodiment of the disclosure may include an operation of controlling the electronic device to operate in an unfolded state.

The method for identifying the folded state or the unfolded state of the electronic device according to an embodiment of the disclosure may include an operation of controlling a first reception channel of a touch panel corresponding to a first housing including a first surface facing in a first direction to be changed into a transmission channel at a designated cycle.

The method for identifying the folded state or the unfolded state of the electronic device according to an embodiment of the disclosure may include an operation of identifying a capacitance between the first surface and the second surface, based on the changed transmission channel and a second reception channel of the touch panel corresponding to a second housing including a second surface facing in a second direction.

The method for identifying the folded state or the unfolded state of the electronic device according to an embodiment of the disclosure may include an operation of, when the capacitance between the first surface and the second surface is greater than or equal to a designated capacitance, controlling the electronic device to operate in a folded state.

### [Advantageous Effects of Invention]

According to an electronic device including a flexible display and a method for identifying a folded state or an unfolded state according to an embodiment of the disclosure, it is possible to prevent a malfunction in recognizing a folded or unfolded state of foldable housings caused by a magnetic material or a metal by determining a folded state and/or an unfolded state of the electronic device by using the flexible display.

According to the electronic device including the flexible display and the method for identifying the folded state or the unfolded state according to an embodiment of the disclosure, it is possible to secure an internal space of the electronic device without using an additional sensor such as a Hall sensor by determining a folded state and/or an unfolded state of the electronic device by using the flexible display.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1A is a front perspective view of an electronic device illustrating a flat state (or unfolded state) according to various embodiments of the disclosure;
FIG. 1B is a plan view illustrating a front surface of an electronic device in an unfolded state according to various embodiments of the disclosure;
FIG. 1C is a plan view illustrating a rear surface of an electronic device in an unfolded state according to various embodiments of the disclosure;
FIG. 2A is a perspective view of an electronic device illustrating a folded state according to various embodiments of the disclosure;
FIG. 2B is a perspective view of an electronic device illustrating an intermediate state according to various embodiments of the disclosure;
FIG. 3 is a block diagram of an electronic device in a network environment according to various embodiments of the disclosure;
FIG. 4 is a diagram illustrating a signal detection operation of a first display according to an embodiment of the disclosure;
FIG. 5 is a diagram illustrating an operation of identifying a folded state or an unfolded state of an electronic device according to an embodiment of the disclosure;
FIG. 6 is a graph illustrating a touch panel driving time for identifying a folded state or an unfolded state according to a power state of an electronic device according to an embodiment of the disclosure;
FIG. 7 is a flowchart illustrating a method for identifying a folded state or an unfolded state of an electronic device according to an embodiment of the disclosure; and
FIG. 8 is a flowchart illustrating a method for identifying a folded state or an unfolded state of an electronic device according to an embodiment of the disclosure.

### [Mode for the Invention]

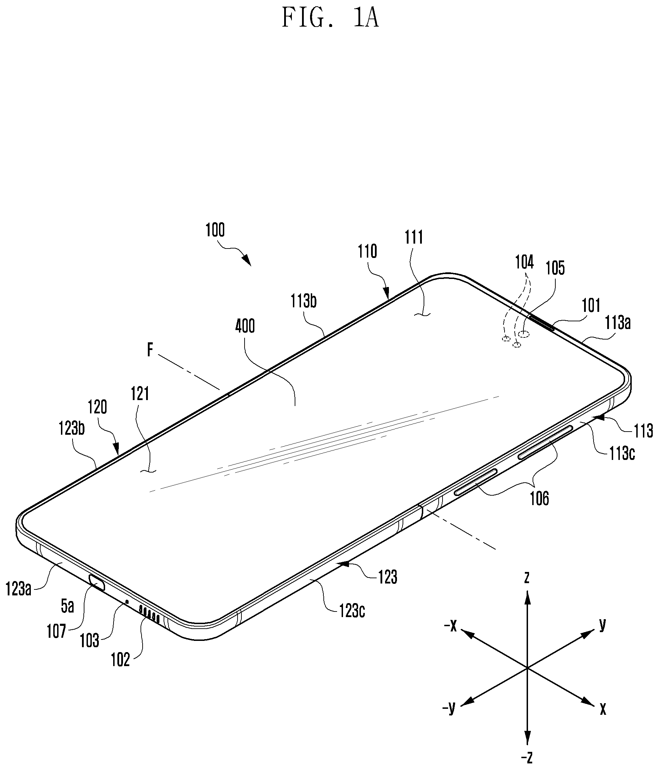

FIG. 1A is a perspective view illustrating a flat state (or unfolded state) of an electronic device according to various embodiments of the disclosure.

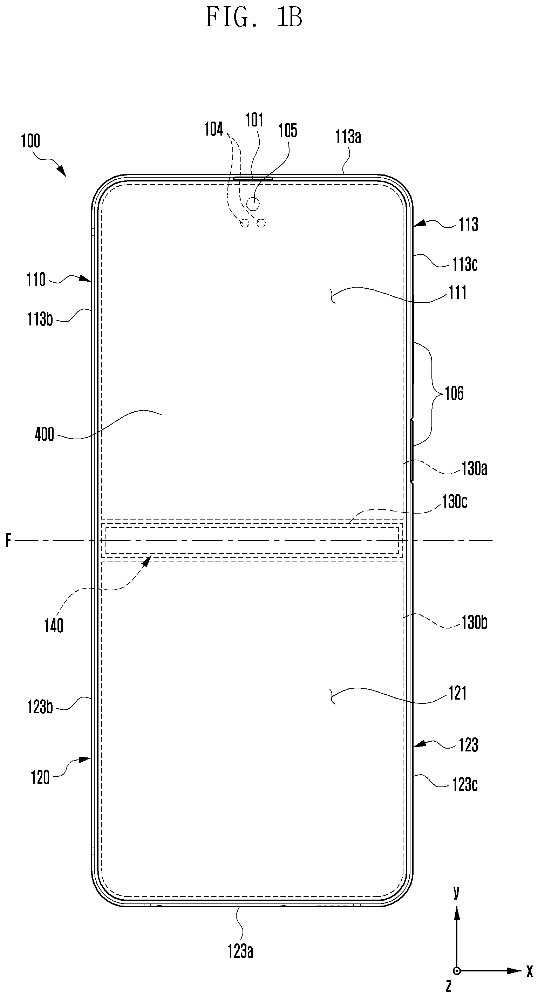

FIG. 1B is a plan view illustrating a front surface of an electronic device in an unfolded state of the electronic device according to various embodiments of the disclosure.

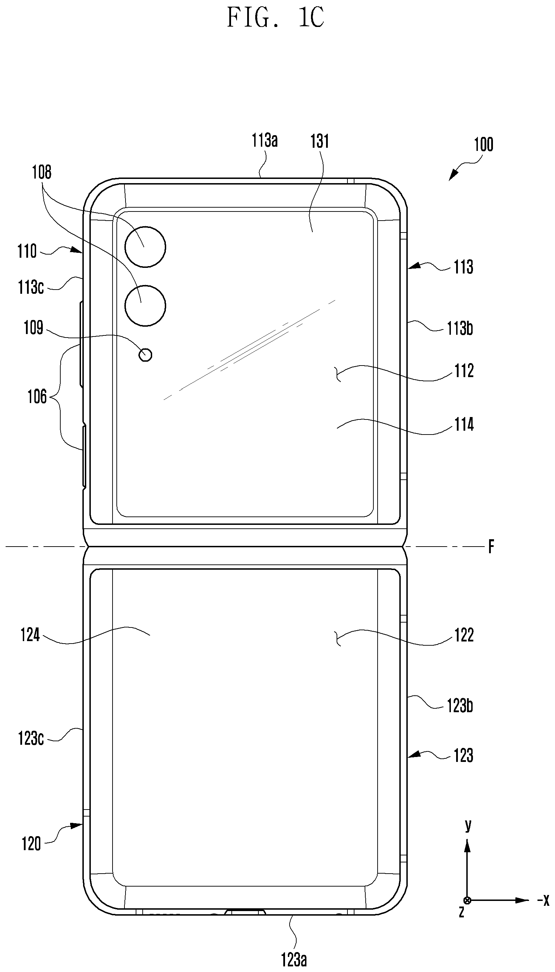

FIG. 1C is a plan view illustrating a rear surface of an electronic device in a flat state according to various embodiments of the disclosure.

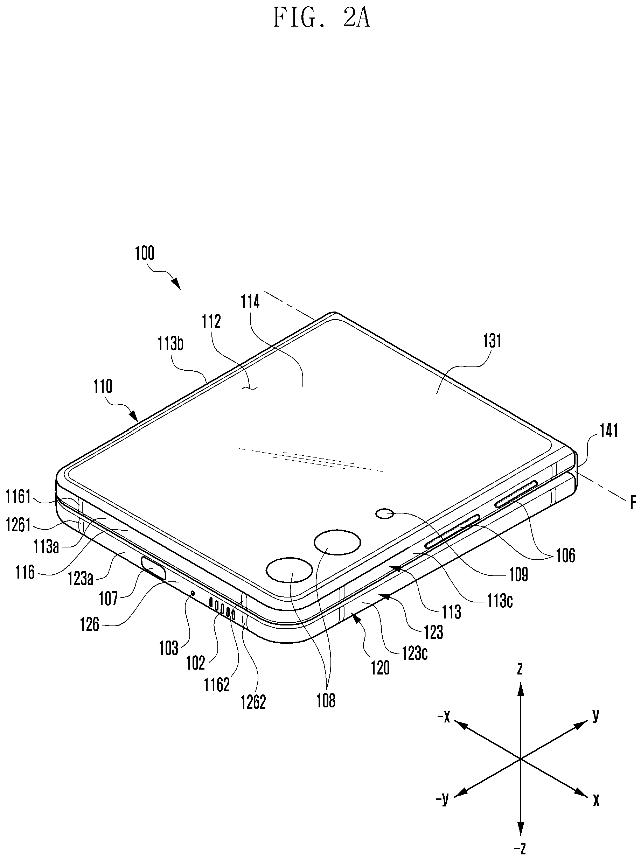

FIG. 2A is a perspective view of an electronic device illustrating a folded state of the electronic device according to various embodiments of the disclosure.

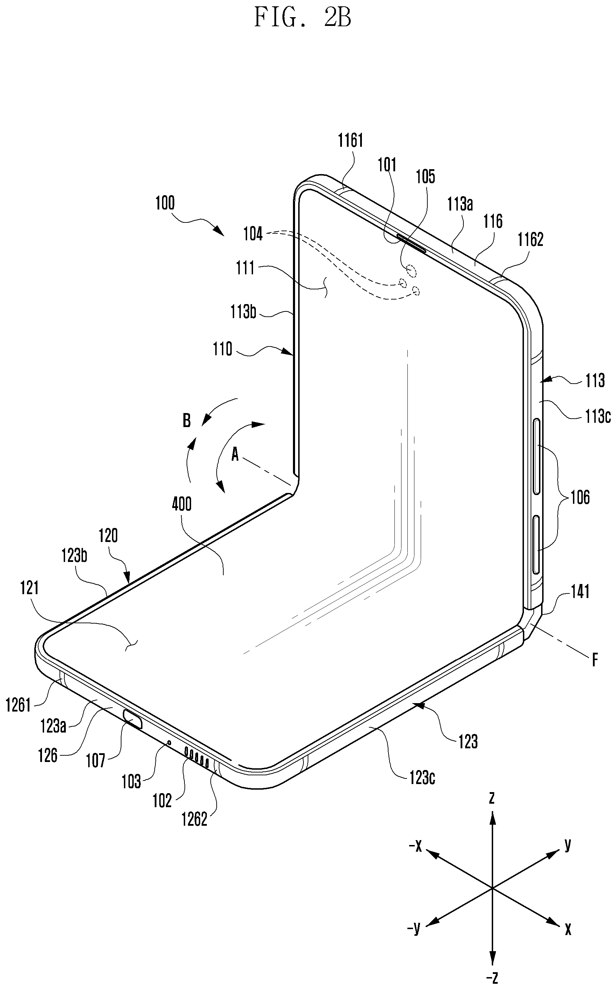

FIG. 2B is a perspective view of an electronic device illustrating an intermediate state of the electronic device according to various embodiments of the disclosure.

Referring to FIGS. 1A to 2B, an electronic device 100 may include a first and a second housing 110 and 120 (e.g., a foldable housing structure) which are foldably coupled to each other about a hinge device (e.g., the hinge device 140 of FIG. 1B).

In an embodiment of the disclosure, the hinge device (e.g., the hinge device 140 of FIG. 1B) may be disposed in the X-axis direction or the Y-axis direction.

In an embodiment of the disclosure, the electronic device 100 may include a first display 400 (e.g., a flexible display, a foldable display, or a main display) disposed in an area (e.g., a recess) formed by the first and second housings 110 and 120. In an embodiment, the first housing 110 and the second housing 120 are arranged on both sides about a folding axis (F), and may have a shape substantially symmetrical with respect to the folding axis (F).

In an embodiment of the disclosure, an angle or distance between the first housing 110 and the second housing 120 may vary depending on a state of the electronic device 100. For example, the angle or distance between the first housing 110 and the second housing 120 may vary depending on whether the electronic device is in a flat state (or unfolded state), a folded state, or an intermediate state.

In an embodiment of the disclosure, in an unfolded state of the electronic device 100, the first housing 110 may include a first surface 111 facing in a first direction (e.g., a front direction) (z-axis direction), and a third surface 112 opposite to the first surface 111 and facing in a second direction (e.g., a rear direction) (-z-axis direction).

In an embodiment of the disclosure, in the unfolded state of the electronic device 100, the second housing 120 may include a second surface 121 facing in the first direction (z-axis direction), and a fourth surface 122 facing in the second direction (-z-axis direction).

In an embodiment of the disclosure, in the unfolded state of the electronic device 100, the first surface 111 of the first housing 110 and the second surface 121 of the second housing 120 may face in substantially the same first direction (z-axis direction).

In an embodiment of the disclosure, in a folded state of the electronic device 100, the first surface 111 of the first housing 110 and the second surface 121 of the second housing 120 may face each other.

In an embodiment of the disclosure, in the unfolded state of the electronic device 100, the third surface 112 of the first housing 110 and the fourth surface 122 of the second housing 120 may face in substantially the same second direction (-z axis direction).

In an embodiment of the disclosure, in the folded state of the electronic device 100, the third surface 112 of the first housing 110 and the fourth surface 122 of the second housing 120 may face in opposite directions. For example, in the folded state of the electronic device 100, the third surface 112 may face in the first direction (z-axis direction) and the fourth surface 122 may face in the second direction (-z-axis direction). In this case, the first display 400 may not be visible from the outside (in folding manner).

In an embodiment of the disclosure, the electronic device 100 may be folded so that the third surface 112 of the first housing 110 and the fourth surface 122 of the second housing 120 face each other. In this case, the first display 400 may be disposed to be visible from the outside (out folding manner).

In an embodiment of the disclosure, the first housing 110 (e.g., a first housing structure) may include a first lateral member 113 which at least partially forms the exterior of the electronic device 100, and a first rear cover 114 which is coupled with the first lateral member 113 and forms at least a part of the third surface 112 of the electronic device 100.

In an embodiment of the disclosure, the first lateral member 113 may include a first lateral surface 113a, a second lateral surface 113b extending from one end of the first lateral surface 113a, and a third lateral surface 113c extending from the other end of the first lateral surface 113a.

In an embodiment of the disclosure, the first lateral member 113 may be formed in a rectangular (e.g., square or rectangle) shape through the first lateral surface 113a, the second lateral surface 113b, and the third lateral surface 113c.

In an embodiment of the disclosure, the second housing 120 (e.g., a second housing structure) may include a second lateral member 123 which at least partially forms the exterior of the electronic device 100, and a second rear cover 124 which is coupled with the second lateral member 123 and forms at least a part of the fourth surface 122 of the electronic device 100.

In an embodiment of the disclosure, the second lateral member 123 may include a fourth lateral surface 123a, a fifth lateral surface 123b extending from one end of the fourth lateral surface 123a, and a sixth lateral surface 123c extending from the other end of the fourth lateral surface 123a.

In an embodiment of the disclosure, the second lateral member 123 may be formed in a rectangular shape through the fourth lateral surface 123a, the fifth lateral surface 123b, and the sixth lateral surface 123c.

In an embodiment of the disclosure, the first and second housings 110 and 120 are not limited to the illustrated shapes and coupling, and may be implemented by a combination and/or coupling of other shapes or parts.

In an embodiment of the disclosure, the first lateral member 113 may be formed integrally with the first rear cover 114, and the second lateral member 123 may be formed integrally with the second rear cover 124.

In an embodiment of the disclosure, in the unfolded state of the electronic device 100, the second lateral surface 113b of the first lateral member 113 and the fifth lateral surface 123b of the second lateral member 123 may be connected without a gap.

In an embodiment of the disclosure, in the unfolded state of the electronic device 100, the third lateral surface 113c of the first lateral member 113 and the sixth lateral surface 123c of the second lateral member 123 may be connected without a gap.

In an embodiment of the disclosure, in the unfolded state of the electronic device 100, the sum of the lengths of the second lateral surface 113b and the fifth lateral surface 123b may be configured to be longer than the length of the first lateral surface 113a and/or the fourth lateral surface 123a.

In an embodiment of the disclosure, in the unfolded state of the electronic device 100, the sum of the lengths of the third lateral surface 113c and the sixth lateral surface 123c may be configured to be longer than the length of the first lateral surface 113a and/or the fourth lateral surface 123a.

Referring to FIGS. 2A and 2B, the first lateral member 113 and/or the second lateral member 123 may be formed of a metal or may further include a polymer injected into a metal. In an embodiment, the first lateral member 113 and/or the second lateral member 123 may include at least one conductive portion 116 and/or 126 electrically segmented through at least one segmented portion 1161 and 1162 and/or 1261 and 1262 formed of a polymer. In this case, the at least one conductive portion 116 and/or 126 may be used as at least a part of an antenna which operates in at least one designated band (e.g., a legacy band) by being electrically connected to a wireless communication circuit included in the electronic device 100.

In an embodiment of the disclosure, the first rear cover 114 and/or the second rear cover 124 may be formed by at least one of coated or tinted glass, ceramic, a polymer, or a metal (e.g., aluminum, stainless steel (STS), or magnesium), or a combination of at least two thereof.

In an embodiment of the disclosure, the first display 400 may be disposed to extend from the first surface 111 of the first housing 110 across the hinge device (e.g., the hinge device 140 of FIG. 1B) to at least a part of the second surface 121 of the second housing 120.

In an embodiment of the disclosure, the first display 400 may include a first area 130a substantially corresponding to the first surface 111, a second area 130b corresponding to the second surface 121, and a third area 130c (e.g., a bendable area or a folding area) which connects the first area 130a and the second area 130b.

In an embodiment of the disclosure, the third area 130c may be positioned at a position corresponding to the hinge device (e.g., the hinge device 140 of FIG. 1B), as a part of the first area 130a and/or the second area 130b.

In an embodiment of the disclosure, the electronic device 100 may include a hinge housing 141 (e.g., a hinge cover) which supports the hinge device (e.g., the hinge device 140 of FIG. 1B).

In an embodiment of the disclosure, the hinge housing 141 may be exposed to the outside when the electronic device 100 is in the folded state, and may be disposed so as not to be visible from the outside by being inserted into an internal space of the first housing 110 and an internal space of the second housing 120 when the electronic device 100 is in the unfolded state.

In an embodiment of the disclosure, the electronic device 100 may include a second display 131 (e.g., a sub-display) which is disposed separately from the first display 400.

In an embodiment of the disclosure, the second display 131 may be disposed on the third surface 112 of the first housing 110 so as to be exposed on a front surface.

In an embodiment of the disclosure, the second display 131 may be disposed on the third surface 112 of the first housing 110 so as to be at least partially exposed.

In an embodiment of the disclosure, when the electronic device 100 is in the folded state, the second display 131 may at least partially replace a display function of the first display 400 to display at least a part of state information of the electronic device 100.

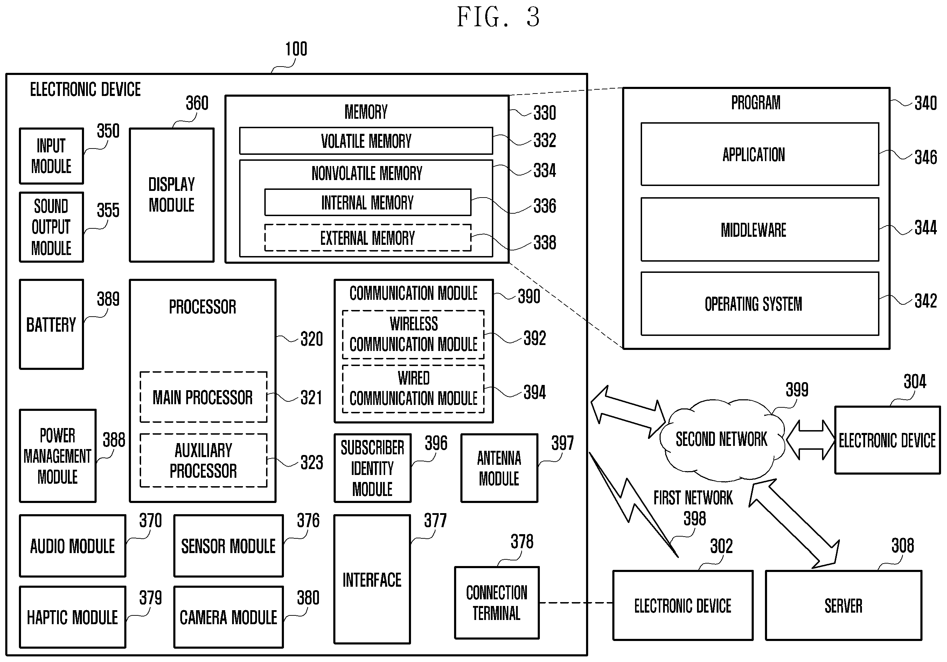

In an embodiment of the disclosure, the electronic device 100 (e.g., the electronic device 100 of FIG. 3) may include at least one of an input device 103 (e.g., a microphone), sound output devices 101 and 102, a sensor module 104, camera devices 105 and 108, key input devices 106, or a connector port 107. In the illustrated embodiment, the input device 103 (e.g., a microphone), the sound output devices 101 and 102, the sensor module 104, the camera devices 105 and 108, the key input devices 106, or the connector port 107 is illustrated as a hole or a circular element formed in the first housing 110 or the second housing 120, but this is an exemplary illustration for explanation and is not limited thereto.

In an embodiment of the disclosure, the input device 103 may include at least one microphone 103 disposed in the second housing 120.

In an embodiment of the disclosure, the input device 103 may include a plurality of microphones 103 disposed to be able to detect the direction of sound. In an embodiment, the plurality of microphones 103 may be disposed at appropriate positions in the first housing 110 and/or the second housing 120.

In an embodiment of the disclosure, the sound output devices 101 and 102 may include at least one speaker 101 and 102. The at least one speaker 101 and 102 may include a call receiver 101 disposed in the first housing 110, and a speaker 102 disposed in the second housing 120.

In an embodiment of the disclosure, the input device 103, the sound output devices 101 and 102, and the connector port 107 may be arranged in a space provided in the first housing 110 and/or the second housing 120 of the electronic device 100, and may be exposed to an external environment through at least one hole formed in the first housing 110 and/or the second housing 120.

In an embodiment of the disclosure, at least one connector port 107 may be used to transmit or receive power and/or data to or from an external electronic device. The at least one connector port (e.g., an ear jack hole) may also receive a connector (e.g., an ear jack) for transmitting or receiving an audio signal to or from the external electronic device. The hole formed in the first housing 110 and/or the second housing 120 may be used in common for the input device 103 and the sound output devices 101 and 102. The sound output devices 101 and 102 may include a speaker (e.g., a piezo speaker) which is not exposed through the hole formed in the first housing 110 and/or the second housing 120.

In an embodiment of the disclosure, the sensor module 104 may generate an electrical signal or a data value corresponding to an internal operating state of the electronic device 100 or an external environment state. The sensor module 104 may detect an external environment through the first surface 111 of the first housing 110. The electronic device 100 may further include at least one sensor module (not shown) disposed to detect an external environment through the third surface 112 of the first housing 110.

In an embodiment of the disclosure, the sensor module 104 (e.g., an illumination sensor) may be disposed under the first display 400 to detect an external environment through the first display 400.

In an embodiment of the disclosure, the sensor module 104 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illumination sensor, a proximity sensor, a biometric sensor, an ultrasonic sensor, or an illumination sensor 104.

In an embodiment of the disclosure, the camera devices 105 and 108 may include a first camera device 105 (e.g., a front camera device) disposed on the first surface 111 of the first housing 110, and a second camera device 108 (e.g., a rear camera device) disposed on the third surface 112 of the first housing 110.

In an embodiment of the disclosure, the electronic device 100 may further include a flash 109 disposed near the second camera device 108. The camera devices 105 and 108 may include at least one lens, an image sensor, and/or an image signal processor. In an embodiment, the camera devices 105 and 108 may be disposed so that two or more lenses (e.g., a wide-angle lens, an ultra-wide-angle lens, or a telephoto lens) and two or more image sensors are positioned on one surface (e.g., the first surface 111, the second surface 121, the third surface 112, or the fourth surface 122) of the electronic device 100. The camera devices 105 and 108 may include an image sensor and/or lenses for an infrared (IR) camera (e.g., a time of flight (TOF) camera and a structured light camera).

In an embodiment of the disclosure, the key input devices 106 (e.g., a key button) may be disposed on the third lateral surface 113c of the first lateral member 113 of the first housing 110. The key input devices 106 may be disposed on at least one lateral surface among the other lateral surfaces 113a and 113b of the first housing 110 and/or the lateral surfaces 123a, 123b, and 123c of the second housing 120.

In an embodiment of the disclosure, the electronic device 100 may not include a part or all of the key input devices 106, and key input devices 106, which are not included, may be implemented in another form, such as a soft key, on the first display 400. The key input devices 106 may be implemented by using a pressure sensor included in the first display 400.

In an embodiment of the disclosure, a part (e.g., the first camera device 105) of the camera devices 105 and 108 or the sensor module 104 may be arranged so as to be visually exposed through the first display 400.

In an embodiment of the disclosure, the first camera device 105 or the sensor module 104 may be optically exposed to the outside from an internal space of the electronic device 100 through an opening (e.g., a through-hole) which is at least partially formed in the first display 400.

In an embodiment of the disclosure, at least a part of the first camera device 105 may be disposed so as not to be visually exposed through the first display 400 from the internal space of the electronic device 100.

In an embodiment of the disclosure, at least a part of the sensor module 104 may be disposed so as not to be visually exposed through the first display 400 from the internal space of the electronic device 100.

Referring to FIG. 2B, the electronic device 100 may operate to maintain at least one designated folding angle in an intermediate state through the hinge device (e.g., the hinge device 140 of FIG. 1B). In this case, the electronic device 100 may control the first display 400 so that different contents are displayed on a display area (e.g., the first area 130a) corresponding to the first surface 111 and a display area (e.g., the second area 130b) corresponding to the second surface 121. In an embodiment, the electronic device 100 may operate in a substantially unfolded state (e.g., the unfolded state of FIG. 1A) and/or a substantially folded state (e.g., the folded state of FIG. 2A) with reference to a predetermined folding angle (e.g., an angle between the first housing 110 and the second housing 120 when the electronic device 100 is in the intermediate state) through the hinge device (e.g., the hinge device 140 of FIG. 1B). In an embodiment, the electronic device 100 may operate, through the hinge device (e.g., the hinge device 140 of FIG. 1B), to transition to an unfolded state (e.g., the unfolded state of FIG. 1A) when a pressing force is applied in an unfolding direction (direction A) in a state of being unfolded at a predetermined folding angle. In an embodiment, the electronic device 100 may operate, through the hinge device (e.g., the hinge device 140 of FIG. 1B), to transition to a folded state (e.g., the folded state of FIG. 2A) when a pressing force is applied in a folding direction (direction B) in a state of being unfolded at a predetermined folding angle. In an embodiment, the electronic device 100 may operate, through the hinge device (e.g., the hinge device 140 of FIG. 1B), to maintain an unfolded state (not shown) at various folding angles (free stop function).

Fig. 3 is a block diagram illustrating an electronic device 100 in a network environment according to various embodiments.

Referring to Fig. 3, the electronic device 100 in the network environment may communicate with an electronic device 302 via a first network 398 (e.g., a short-range wireless communication network), or at least one of an electronic device 304 or a server 308 via a second network 399 (e.g., a long-range wireless communication network). According to an embodiment, the electronic device 100 may communicate with the electronic device 304 via the server 308. According to an embodiment, the electronic device 100 may include a processor 320, memory 330, an input module 350, a sound output module 355, a display module 360, an audio module 370, a sensor module 376, an interface 377, a connecting terminal 378, a haptic module 379, a camera module 380, a power management module 388, a battery 389, a communication module 390, a subscriber identification module(SIM) 396, or an antenna module 397. In some embodiments, at least one of the components (e.g., the connecting terminal 378) may be omitted from the electronic device 100, or one or more other components may be added in the electronic device 100. In some embodiments, some of the components (e.g., the sensor module 376, the camera module 380, or the antenna module 397) may be implemented as a single component (e.g., the display module 360).

The processor 320 may execute, for example, software (e.g., a program 340) to control at least one other component (e.g., a hardware or software component) of the electronic device 100 coupled with the processor 320, and may perform various data processing or computation. According to one embodiment, as at least part of the data processing or computation, the processor 320 may store a command or data received from another component (e.g., the sensor module 376 or the communication module 390) in volatile memory 332, process the command or the data stored in the volatile memory 332, and store resulting data in non-volatile memory 334. According to an embodiment, the processor 320 may include a main processor 321 (e.g., a central processing unit (CPU) or an application processor (AP)), or an auxiliary processor 323 (e.g., a graphics processing unit (GPU), a neural processing unit (NPU), an image signal processor (ISP), a sensor hub processor, or a communication processor (CP)) that is operable independently from, or in conjunction with, the main processor 321. For example, when the electronic device 100 includes the main processor 321 and the auxiliary processor 323, the auxiliary processor 323 may be adapted to consume less power than the main processor 321, or to be specific to a specified function. The auxiliary processor 323 may be implemented as separate from, or as part of the main processor 321.

The auxiliary processor 323 may control at least some of functions or states related to at least one component (e.g., the display module 360, the sensor module 376, or the communication module 390) among the components of the electronic device 100, instead of the main processor 321 while the main processor 321 is in an inactive (e.g., sleep) state, or together with the main processor 321 while the main processor 321 is in an active state (e.g., executing an application). According to an embodiment, the auxiliary processor 323 (e.g., an image signal processor or a communication processor) may be implemented as part of another component (e.g., the camera module 380 or the communication module 390) functionally related to the auxiliary processor 323. According to an embodiment, the auxiliary processor 323 (e.g., the neural processing unit) may include a hardware structure specified for artificial intelligence model processing. An artificial intelligence model may be generated by machine learning. Such learning may be performed, e.g., by the electronic device 100 where the artificial intelligence is performed or via a separate server (e.g., the server 308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 330 may store various data used by at least one component (e.g., the processor 320 or the sensor module 376) of the electronic device 100. The various data may include, for example, software (e.g., the program 340) and input data or output data for a command related thererto. The memory 330 may include the volatile memory 332 or the non-volatile memory 334.

The program 340 may be stored in the memory 330 as software, and may include, for example, an operating system (OS) 342, middleware 344, or an application 346.

The input module 350 may receive a command or data to be used by another component (e.g., the processor 320) of the electronic device 100, from the outside (e.g., a user) of the electronic device 100. The input module 350 may include, for example, a microphone, a mouse, a keyboard, a key (e.g., a button), or a digital pen (e.g., a stylus pen).

The sound output module 355 may output sound signals to the outside of the electronic device 100. The sound output module 355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 360 may visually provide information to the outside (e.g., a user) of the electronic device 100. The display module 360 may include, for example, a display, a hologram device, or a projector and control circuitry to control a corresponding one of the display, hologram device, and projector. According to an embodiment, the display module 360 may include a touch sensor adapted to detect a touch, or a pressure sensor adapted to measure the intensity of force incurred by the touch.

The audio module 370 may convert a sound into an electrical signal and vice versa. According to an embodiment, the audio module 370 may obtain the sound via the input module 350, or output the sound via the sound output module 355 or a headphone of an external electronic device (e.g., an electronic device 302) directly (e.g., wiredly) or wirelessly coupled with the electronic device 100.

The sensor module 376 may detect an operational state (e.g., power or temperature) of the electronic device 100 or an environmental state (e.g., a state of a user) external to the electronic device 100, and then generate an electrical signal or data value corresponding to the detected state. According to an embodiment, the sensor module 376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 377 may support one or more specified protocols to be used for the electronic device 100 to be coupled with the external electronic device (e.g., the electronic device 302) directly (e.g., wiredly) or wirelessly. According to an embodiment, the interface 377 may include, for example, a high definition multimedia interface (HDMI), a universal serial bus (USB) interface, a secure digital (SD) card interface, or an audio interface.

A connecting terminal 378 may include a connector via which the electronic device 100 may be physically connected with the external electronic device (e.g., the electronic device 302). According to an embodiment, the connecting terminal 378 may include, for example, a HDMI connector, a USB connector, a SD card connector, or an audio connector (e.g., a headphone connector).

The haptic module 379 may convert an electrical signal into a mechanical stimulus (e.g., a vibration or a movement) or electrical stimulus which may be recognized by a user via his tactile sensation or kinesthetic sensation. According to an embodiment, the haptic module 379 may include, for example, a motor, a piezoelectric element, or an electric stimulator.

The camera module 380 may capture a still image or moving images. According to an embodiment, the camera module 380 may include one or more lenses, image sensors, image signal processors, or flashes.

The power management module 388 may manage power supplied to the electronic device 100. According to one embodiment, the power management module 388 may be implemented as at least part of, for example, a power management integrated circuit (PMIC).

The battery 389 may supply power to at least one component of the electronic device 100. According to an embodiment, the battery 389 may include, for example, a primary cell which is not rechargeable, a secondary cell which is rechargeable, or a fuel cell.

The communication module 390 may support establishing a direct (e.g., wired) communication channel or a wireless communication channel between the electronic device 100 and the external electronic device (e.g., the electronic device 302, the electronic device 304, or the server 308) and performing communication via the established communication channel. The communication module 390 may include one or more communication processors that are operable independently from the processor 320 (e.g., the application processor (AP)) and supports a direct (e.g., wired) communication or a wireless communication. According to an embodiment, the communication module 390 may include a wireless communication module 392 (e.g., a cellular communication module, a short-range wireless communication module, or a global navigation satellite system (GNSS) communication module) or a wired communication module 394 (e.g., a local area network (LAN) communication module or a power line communication (PLC) module). A corresponding one of these communication modules may communicate with the external electronic device via the first network 398 (e.g., a short-range communication network, such as Bluetooth^{™} wireless-fidelity (Wi-Fi) direct, or infrared data association (IrDA)) or the second network 399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 392 may identify and authenticate the electronic device 100 in a communication network, such as the first network 398 or the second network 399, using subscriber information (e.g., international mobile subscriber identity (IMSI)) stored in the subscriber identification module 396.

The wireless communication module 392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 392 may support a high-frequency band (e.g., the mmWave band) to achieve, e.g., a high data transmission rate. The wireless communication module 392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 392 may support various requirements specified in the electronic device 100, an external electronic device (e.g., the electronic device 304), or a network system (e.g., the second network 399). According to an embodiment, the wireless communication module 392 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 397 may transmit or receive a signal or power to or from the outside (e.g., the external electronic device) of the electronic device 100. According to an embodiment, the antenna module 397 may include an antenna including a radiating element composed of a conductive material or a conductive pattern formed in or on a substrate (e.g., a printed circuit board (PCB)). According to an embodiment, the antenna module 397 may include a plurality of antennas (e.g., array antennas). In such a case, at least one antenna appropriate for a communication scheme used in the communication network, such as the first network 398 or the second network 399, may be selected, for example, by the communication module 390 (e.g., the wireless communication module 392) from the plurality of antennas. The signal or the power may then be transmitted or received between the communication module 390 and the external electronic device via the selected at least one antenna. According to an embodiment, another component (e.g., a radio frequency integrated circuit (RFIC)) other than the radiating element may be additionally formed as part of the antenna module 397.

According to various embodiments, the antenna module 397 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 100 and the external electronic device 304 via the server 308 coupled with the second network 399. Each of the electronic devices 302 or 304 may be a device of a same type as, or a different type, from the electronic device 100. According to an embodiment, all or some of operations to be executed at the electronic device 100 may be executed at one or more of the external electronic devices 302, 304, or 308. For example, if the electronic device 100 should perform a function or a service automatically, or in response to a request from a user or another device, the electronic device 100, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 100. The electronic device 100 may provide the outcome, with or without further processing of the outcome, as at least part of a reply to the request. To that end, a cloud computing, distributed computing, mobile edge computing (MEC), or client-server computing technology may be used, for example. The electronic device 100 may provide ultra low-latency services using, e.g., distributed computing or mobile edge computing. In another embodiment, the external electronic device 304 may include an internet-of-things (IoT) device. The server 308 may be an intelligent server using machine learning and/or a neural network. According to an embodiment, the external electronic device 304 or the server 308 may be included in the second network 399. The electronic device 100 may be applied to intelligent services (e.g., smart home, smart city, smart car, or healthcare) based on 5G communication technology or IoT-related technology.

The electronic device 100 of FIG. 3 may be the same as the electronic device 100 of FIG. 1. The sensor module 376 of FIG. 3 may be the same as the sensor module 104 of FIG. 1. The camera module 180 of FIG. 3 may be the same as the camera devices 105 and 108 of FIG. 1. The display module 360 of FIG. 3 may be the same as the first display 400 and the second display 131 of FIG. 1. The input module 350 of FIG. 3 may be the same as the input device 103 of FIG. 1. The sound output module 355 of FIG. 3 may be the same as the sound output devices 101 and 102 of FIG. 1.

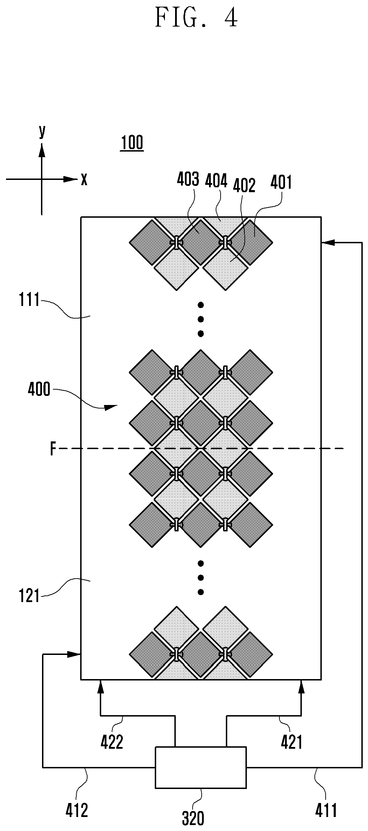

FIG. 4 is a diagram illustrating a signal detection operation of the first display 400 according to an embodiment of the disclosure.

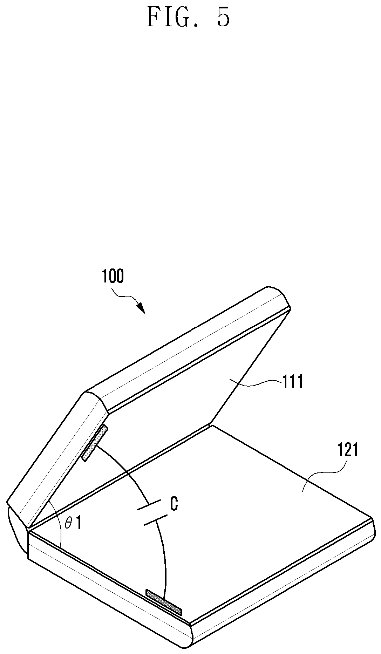

FIG. 5 is a diagram illustrating an operation of identifying a folded state or an unfolded state of the electronic device 100 according to an embodiment of the disclosure.

In an embodiment, the electronic device 100 may include the first display 400 and the processor 320. For example, the processor 320 may include a touch integrated circuit (IC).

Referring to FIGS. 1A, 1B, 4, and 5, the first display 400 may be disposed to extend from the first surface 111 of the first housing 110 across the hinge device 140 to at least a part of the second surface 121 of the second housing 120.

In an embodiment, the first display 400 may include a flexible display or a foldable display.

In an embodiment, the first display 400 may include a touch panel. The touch panel included in the first display 400 may include a capacitive touch panel. The capacitive touch panel may identify touch coordinates by recognizing a difference in capacitance before and after a touch by using sensing electrodes of multiple layers and/or a single layer. The sensing electrodes are preferably formed of a transparent conductive material such as indium tin oxide (ITO), but are not limited thereto, and may be formed of any one of a metal mesh, silver nanowires, carbon nanotubes, and graphene, or a combination thereof.

In an embodiment, the first display 400 may include a plurality of sensing electrodes 401, 402, 403, and 404 for recognizing touch coordinates. The first display 400 may identify touch coordinates by recognizing a difference in capacitance before and after a touch by using the plurality of sensing electrodes 401, 402, 403, and 404.

In an embodiment, the processor 320 may include transmission channels (Tx) 421 and 422 and reception channels (Rx) 411 and 412 connected to the plurality of sensing electrodes 401, 402, 403, and 404.

In an embodiment, the transmission channels (Tx) 421 and 422 may transmit driving signals to the touch panel or the plurality of sensing electrodes 401, 402, 403, and 404.

In an embodiment, the reception channels (Rx) 411 and 412 may transmit, to the processor 320, detection signals received from the touch panel or the plurality of sensing electrodes 401, 402, 403, and 404.

In an embodiment, the processor 320 may transmit driving signals to the plurality of sensing electrodes 401, 402, 403, and 404 through the transmission channels (Tx) 421 and 422.

In an embodiment, the processor 320 may receive, through the reception channels (Rx) 411 and 412, detection signals detected through the plurality of sensing electrodes 401, 402, 403, and 404.

In an embodiment, when one of the reception channels (Rx) 411 and 412 and the transmission channels (Tx) 421 and 422 of the sensing electrodes 401, 402, 403, and 404 is in a horizontal direction (e.g., the x-axis direction), the other may be in a vertical direction (e.g., the y-axis direction).

In an embodiment, the reception channels (Rx) 411 and 412 of the sensing electrodes 401, 402, 403, and 404 may be in the vertical direction (e.g., the y-axis direction), and the transmission channels (Tx) 421 and 422 of the sensing electrodes 401, 402, 403, and 404 may be in the horizontal direction (e.g., the x-axis direction).

In an embodiment, the roles of the reception channels (Rx) 411 and 412 and the transmission channels (Tx) 421 and 422 of the sensing electrodes 401, 402, 403, and 404 may be changed under the control of the processor 320. For example, a first reception channel 411 may be changed into a transmission channel under the control of the processor 320.

In an embodiment, in the electronic device 100, the touch panel included on the first surface 111 of the first display 400 may communicate with the processor 320 through the first reception channel 411 and a first transmission channel 421.

In an embodiment, the first display 400 may be disposed to extend from the first surface 111 of the first housing 110 across the hinge device 140 to at least a part of the second surface 121 of the second housing 120. The first display 400 may form the surfaces of the first surface 111 of the first housing 110 and the second surface 121 of the second housing 120, the first surface 111 of the first housing 110 may be substantially the same as the first surface 111 of the first display 400, and the second surface 121 of the second housing 120 may be substantially the same as the second surface 121 of the first display 400.

In an embodiment, in the electronic device 100, the touch panel included on the second surface 121 of the first display 400 may communicate with the processor 320 through a second reception channel 412 and a second transmission channel 422.

In an embodiment, the electronic device 100 may change the first reception channel 411 corresponding to the first surface 111 of the first display 400 to a transmission channel at a designated cycle.

In an embodiment, the electronic device 100 may change the first transmission channel 421 corresponding to the first surface 111 of the first display 400 to a reception channel at a designated cycle.

In an embodiment, the electronic device 100 may change the second reception channel 412 corresponding to the second surface 121 of the first display 400 to a transmission channel at a designated cycle.

In an embodiment, the electronic device 100 may change the second transmission channel 422 corresponding to the second surface 121 of the first display 400 to a reception channel at a designated cycle.

Referring to FIG. 5, the electronic device 100 may have a distance between the first surface 111 and the second surface 121 that decreases or increases depending on movement of the first housing 110 and the second housing 120. As in the case of changing the first reception channel 411 to a transmission channel, when the role (e.g., a reception channel or a transmission channel) of a channel corresponding to the first surface 111 or the second surface 121 is changed, the electronic device 100 may detect the size of a capacitance or the size of a mutual capacitance, which changes depending on the distance between the first surface 111 and the second surface 121, through a transmission channel and a reception channel, under the control of the processor 320.

In an embodiment, the electronic device 100 may determine a folded state or an unfolded state of the electronic device 100, based on a signal regarding the size of the capacitance or the size of the mutual capacitance, the size being detected through the transmission channel and the reception channel under the control of the processor 320.

In an embodiment, when the distance between the first surface 111 and the second surface 121 is shorter than a designated distance, the capacitance or the mutual capacitance may become greater than a designated capacitance.

In an embodiment, when an angle between the first surface 111 and the second surface 121 is smaller than a designated angle (θ1), the capacitance or the mutual capacitance may become greater than a designated capacitance (C). For example, the designated angle may be approximately 10 degrees.

In an embodiment, the electronic device 100 may determine that the first housing 110 and the second housing 120 are in the folded state when the size of the capacitance or the size of the mutual capacitance, the size being detected through the transmission channel and the reception channel under the control of the processor 320, is greater than or equal to the designated capacitance (C).

In an embodiment, the electronic device 100 may determine that the first housing 110 and the second housing 120 are in the unfolded state when the size of the capacitance or the size of the mutual capacitance, the size being detected through the transmission channel and the reception channel under the control of the processor 320, is smaller than the designated capacitance (C).

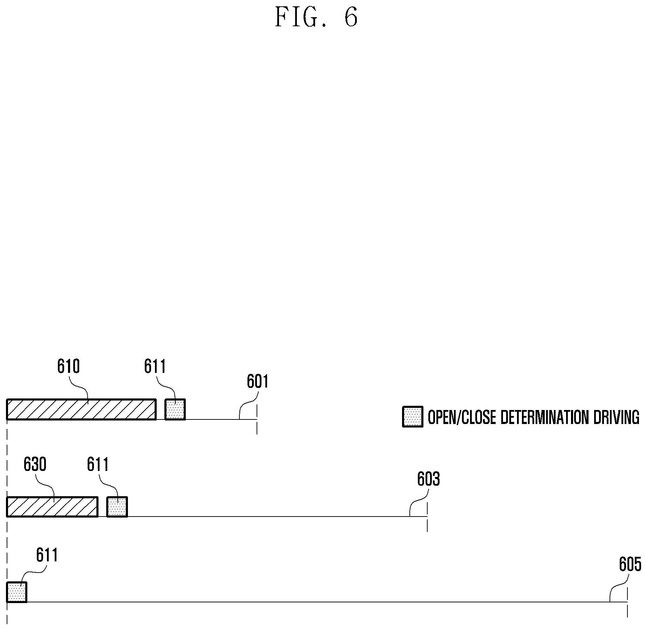

FIG. 6 is a graph illustrating a touch panel driving time for identifying a folded state or an unfolded state according to a power state of the electronic device 100 according to an embodiment of the disclosure.

A graph 601 illustrates a first touch panel driving time 610 of the electronic device 100 in a first state (e.g., a normal power state (or normal power mode)), and a driving time 611 after changing a reception channel and a transmission channel of a touch panel for identifying a folded state or an unfolded state. The electronic device 100 may operate, as one frame, the first touch panel driving time 610 and the driving time 611 after changing the reception channel and the transmission channel of the touch panel for identifying the folded state or the unfolded state, and may periodically change the first reception channel 411 or the second reception channel 412 to the transmission channel. In the first touch panel driving time 610, the first reception channel 411 or the second reception channel 412 may operate as the reception channel.

A graph 603 illustrates a second touch panel driving time 630 of the electronic device 100 in a second state (e.g., a low power state (or low power mode)), and a driving time 611 after changing a channel for identifying a folded state or an unfolded state. The electronic device 100 may operate, as one frame, the second touch panel driving time 630 and the driving time 611 after changing the reception channel and the transmission channel of the touch panel for identifying the folded state or the unfolded state, and may periodically change the first reception channel 411 or the second reception channel 412 to the transmission channel. In the second touch panel driving time 630, the first reception channel 411 or the second reception channel 412 may operate as the reception channel.

The first touch panel driving time 610 may be longer than the second touch panel driving time 630. However, the disclosure is not limited thereto, and the first touch panel driving time 610 may be equal to the second touch panel driving time 630, or the first touch panel driving time 610 may be shorter than the second touch panel driving time 630.

A graph 605 illustrates a driving time 611 after changing a channel for identifying a folded state or an unfolded state of the electronic device 100 in a third state (e.g., a folded state or a deep sleep state (or deep sleep mode)). In the folded state or the deep sleep state, the electronic device 100 does not drive the touch panel for receiving a touch input, and may operate, as one frame, the driving time 611 after changing the reception channel and the transmission channel of the touch panel for identifying the folded state or the unfolded state, and may periodically change the first reception channel 411 or the second reception channel 412 to the transmission channel.

Referring to the graph 601, the graph 603, and the graph 605, a cycle for changing the first reception channel 411 or the second reception channel 412 to the transmission channel may vary depending on a power mode (e.g., normal power, low power, or deep sleep) of the electronic device 100.

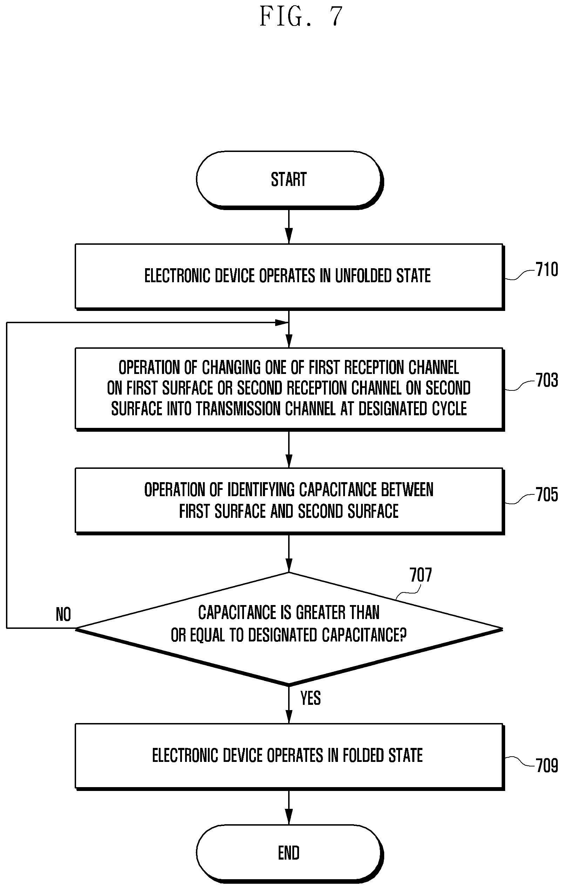

FIG. 7 is a flowchart illustrating a method for identifying a folded state or an unfolded state of the electronic device 100 according to an embodiment of the disclosure.

In an embodiment, the memory 330 may store instructions. The instructions, when executed by the processor 320, may cause the electronic device 100 to perform an operation of identifying a folded state or an unfolded state of the electronic device 100 of FIG. 7.

In an embodiment, in operation 701, the electronic device 100 may operate in an unfolded state under the control of the processor 320.

In an embodiment, the instructions, when executed by the processor 320, may cause the electronic device 100 to operate in an unfolded state in operation 701.

In an embodiment, in operation 703, the electronic device 100 may, under the control of the processor 320, change one of the first reception channel 411 corresponding to a touch panel disposed on the first surface 111 or the second reception channel 412 corresponding to the touch panel disposed on the second surface 121 to a transmission channel at a designated cycle.

In an embodiment, the instructions, when executed by the processor 320, may cause the electronic device 100 to, in operation 703, change one of the first reception channel 411 corresponding to a touch panel disposed on the first surface 111 or the second reception channel 412 corresponding to the touch panel disposed on the second surface 121 to a transmission channel at a designated cycle.

In an embodiment, in operation 703, the electronic device 100 may, under the control of the processor 320, change the first reception channel 411 corresponding to the touch panel disposed on the first surface 111 to the transmission channel at the designated cycle.

In an embodiment, the instructions, when executed by the processor 320, may cause the electronic device 100 to, in operation 703, change the first reception channel 411 corresponding to the touch panel disposed on the first surface 111 to the transmission channel at the designated cycle.

In an embodiment, in operation 705, the electronic device 100 may, under the control of the processor 320, identify a capacitance between the first surface 111 and the second surface 121 by using the second reception channel 412 and the channel changed to the transmission channel (e.g., the first reception channel 411 before the change). The capacitance may be a value corresponding to a change in a capacitance or a change in a mutual capacitance between the first surface 111 and the second surface 121.

In an embodiment, the instructions, when executed by the processor 320, may cause the electronic device 100 to, in operation 705, identify a capacitance between the first surface 111 and the second surface 121 by using the second reception channel 412 and the channel changed to the transmission channel (e.g., the first reception channel 411 before the change).

In an embodiment, in operation 705, the electronic device 100 may, under the control of the processor 320, identify the capacitance between the first surface 111 and the second surface 121 by using the second reception channel 412 corresponding to the second surface 121 and the transmission channel corresponding to the first surface 111.

In an embodiment, the instructions, when executed by the processor 320, may cause the electronic device 100 to, in operation 705, identify the capacitance between the first surface 111 and the second surface 121 by using the second reception channel 412 corresponding to the second surface 121 and the transmission channel corresponding to the first surface 111.

In an embodiment, in operation 707, the electronic device 100 may, under the control of the processor 320, determine whether the capacitance between the first surface 111 and the second surface 121 is greater than or equal to a designated capacitance.

In an embodiment, the instructions, when executed by the processor 320, may cause the electronic device 100 to, in operation 707, determine whether the capacitance between the first surface 111 and the second surface 121 is greater than or equal to a designated capacitance.

In an embodiment, when the capacitance between the first surface 111 and the second surface 121 is greater than or equal to the designated capacitance, the electronic device 100 may branch from operation 707 to operation 709.

In an embodiment, when the capacitance between the first surface 111 and the second surface 121 is less than the designated capacitance, the electronic device 100 may branch from operation 707 to operation 703.

In an embodiment, in operation 709, the electronic device 100 may, under the control of the processor 320, operate in a folded state (or determine that the electronic device is in the folded state).

In an embodiment, the instructions, when executed by the processor 320, may cause the electronic device 100 to, in operation 709, operate in a folded state (or determine that the electronic device is in the folded state).

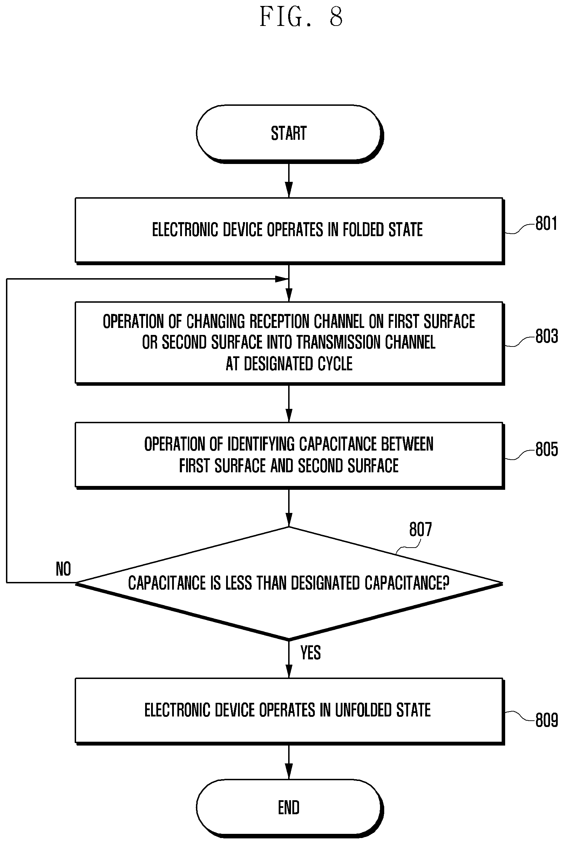

FIG. 8 is a flowchart illustrating a method for identifying a folded state or an unfolded state of the electronic device 100 according to an embodiment of the disclosure.

In an embodiment, the memory 330 may store instructions. The instructions, when executed by the processor 320, may cause the electronic device 100 to perform an operation of identifying a folded state or an unfolded state of the electronic device 100 of FIG. 8.

In an embodiment, in operation 801, the electronic device 100 may operate in a folded state under the control of the processor 320.

In an embodiment, the instructions, when executed by the processor 320, may cause the electronic device 100 to operate in a folded state in operation 801.

In an embodiment, in operation 803, the electronic device 100 may, under the control of the processor 320, change one of the first reception channel 411 corresponding to a touch panel disposed on the first surface 111 or the second reception channel 412 corresponding to the touch panel disposed on the second surface 121 to a transmission channel at a designated cycle.

In an embodiment, the instructions, when executed by the processor 320, may cause the electronic device 100 to, in operation 803, change one of the first reception channel 411 corresponding to a touch panel disposed on the first surface 111 or the second reception channel 412 corresponding to the touch panel disposed on the second surface 121 to a transmission channel at a designated cycle.

In an embodiment, in operation 803, the electronic device 100 may, under the control of the processor 320, change the first reception channel 411 corresponding to the touch panel disposed on the first surface 111 to the transmission channel at the designated cycle.

In an embodiment, the instructions, when executed by the processor 320, may cause the electronic device 100 to, in operation 803, change the first reception channel 411 corresponding to the touch panel disposed on the first surface 111 to the transmission channel at the designated cycle.

In an embodiment, in operation 805, the electronic device 100 may, under the control of the processor 320, identify a capacitance between the first surface 111 and the second surface 121 by using the second reception channel 412 and the channel changed to the transmission channel (e.g., the first reception channel 411 before the change). The capacitance may be a value corresponding to a change in a capacitance or a change in a mutual capacitance between the first surface 111 and the second surface 121.

In an embodiment, the instructions, when executed by the processor 320, may cause the electronic device 100 to, in operation 805, identify a capacitance between the first surface 111 and the second surface 121 by using the second reception channel 412 and the channel changed to the transmission channel (e.g., the first reception channel 411 before the change).

In an embodiment, in operation 805, the electronic device 100 may, under the control of the processor 320, identify the capacitance between the first surface 111 and the second surface 121 by using the second reception channel 412 corresponding to the second surface 121 and the transmission channel corresponding to the first surface 111.

In an embodiment, the instructions, when executed by the processor 320, may cause the electronic device 100 to, in operation 805, identify the capacitance between the first surface 111 and the second surface 121 by using the second reception channel 412 corresponding to the second surface 121 and the transmission channel corresponding to the first surface 111.

In an embodiment, in operation 807, the electronic device 100 may, under the control of the processor 320, determine whether the capacitance between the first surface 111 and the second surface 121 is less than a designated capacitance.

In an embodiment, the instructions, when executed by the processor 320, may cause the electronic device 100 to, in operation 807, determine whether the capacitance between the first surface 111 and the second surface 121 is less than a designated capacitance.

In an embodiment, when the capacitance between the first surface 111 and the second surface 121 is less than the designated capacitance, the electronic device 100 may branch from operation 807 to operation 809.

In an embodiment, when the capacitance between the first surface 111 and the second surface 121 is greater than or equal to the designated capacitance, the electronic device 100 may branch from operation 807 to operation 803.

In an embodiment, in operation 809, the electronic device 100 may operate in an unfolded state under the control of the processor 320.

In an embodiment, the instructions, when executed by the processor 320, may cause the electronic device 100 to operate in an unfolded state in operation 809.

In an embodiment, an electronic device 100 including a flexible display (e.g., the first display 400) may include a first housing 110 connected to a hinge device (e.g., the hinge device 140 of FIG. 1B) and including a first surface 111 facing in a first direction, and a second housing 120 including a second surface 121 facing in a second direction and configured to be folded toward the first housing 110 about the hinge device (e.g., the hinge device 140 of FIG. 1B).

In an embodiment, the electronic device 100 including the flexible display (e.g., the first display 400) may include the flexible display (e.g., the first display 400) extending from the first surface 111 to the second surface 121 to form the first surface 111 and the second surface 121, and including a touch panel, a first reception channel 411 and a first transmission channel 421 corresponding to the touch panel disposed on the first surface 111, a second reception channel 412 and a second transmission channel 422 corresponding to the touch panel disposed on the second surface 121, a memory 330 configured to store instructions, and a processor 320.

In an embodiment, the instructions, when executed by the processor 320, may cause the electronic device 100 to control the electronic device 100 to operate in an unfolded state, control the first reception channel 411 to be changed into a transmission channel at a designated cycle, identify a capacitance between the first surface 111 and the second surface 121, based on the changed transmission channel and the second reception channel 412, and when the capacitance between the first surface 111 and the second surface 121 is greater than or equal to a designated capacitance, control the electronic device 100 to operate in a folded state.

In an embodiment, the electronic device 100 including the flexible display (e.g., the first display 400) may control the electronic device 100 to operate in the unfolded state when the capacitance between the first surface 111 and the second surface 121 is less than the designated capacitance.

In an embodiment, the touch panel may be a capacitive touch panel including a plurality of sensing electrodes.

In an embodiment, the first reception channel 411 and the second reception channel 412 may be arranged in a y-axis direction or a horizontal direction of the touch panel, and may transmit detection signals of the plurality of sensing electrodes to the processor 320.

In an embodiment, the first transmission channel 421 and the second transmission channel 422 may be arranged in an x-axis direction or a vertical direction of the touch panel, and may transmit driving signals from the processor 320 to the plurality of sensing electrodes.

In an embodiment, the designated cycle may vary depending on a power mode of the electronic device 100.

In an embodiment, the power mode may be one of a normal power mode, a low power mode, or a deep sleep mode.

In an embodiment, the deep sleep mode may include power operation in the folded state of the electronic device 100.

In an embodiment, the instructions, when executed by the processor 320, may cause the electronic device 100 to, while the electronic device 100 operates in the folded state, control the first reception channel 411 to be changed into the transmission channel at the designated cycle, identify the capacitance between the first surface 111 and the second surface 121, based on the changed transmission channel and the second reception channel 412, and when the capacitance between the first surface 111 and the second surface 121 is less than the designated capacitance, control the electronic device 100 to operate in the unfolded state.

In an embodiment, the capacitance between the first surface 111 and the second surface 121 may be proportional to a distance between the first surface 111 and the second surface 121 or an angle between the first surface 111 and the second surface 121.

In an embodiment, a method for identifying a folded state or an unfolded state of an electronic device 100 may include an operation of controlling the electronic device 100 to operate in an unfolded state, an operation of controlling a first reception channel 411 of a touch panel corresponding to a first housing 110 including a first surface 111 facing in a first direction to be changed into a transmission channel at a designated cycle, an operation of identifying a capacitance between the first surface 111 and the second surface 121, based on the changed transmission channel and a second reception channel 412 of the touch panel corresponding to a second housing 120 including a second surface 121 facing in a second direction, and an operation of, when the capacitance between the first surface 111 and the second surface 121 is greater than or equal to a designated capacitance, controlling the electronic device 100 to operate in a folded state.

In an embodiment, the method for identifying the folded state or the unfolded state of the electronic device 100 may include an operation of, when the capacitance between the first surface 111 and the second surface 121 is less than the designated capacitance, controlling the electronic device 100 to operate in the unfolded state.

In an embodiment, the method for identifying the folded state or the unfolded state of the electronic device 100 may include an operation of, while the electronic device 100 operates in the folded state, changing the first reception channel 411 to the transmission channel at the designated cycle, an operation of identifying the capacitance between the first surface 111 and the second surface 121, based on the changed transmission channel and the second reception channel 412, and an operation of, when the capacitance between the first surface 111 and the second surface 121 is less than the designated capacitance, controlling the electronic device 100 to operate in the unfolded state.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 100). For example, a processor (e.g., the processor 100) of the machine (e.g., the electronic device 120) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising a flexible display, the electronic device comprising:
a first housing connected to a hinge device and comprising a first surface facing in a first direction;
a second housing comprising a second surface facing in a second direction and configured to be folded toward the first housing about the hinge device;
the flexible display extending from the first surface to the second surface to form the first surface and the second surface, and comprising a touch panel;
a first reception channel and a first transmission channel corresponding to the touch panel disposed on the first surface;
a second reception channel and a second transmission channel corresponding to the touch panel disposed on the second surface;
a memory configured to store instructions; and
a processor,
wherein the instructions, when executed by the processor, cause the electronic device to:
control the electronic device to operate in an unfolded state;
control the first reception channel to be changed into a transmission channel at a designated cycle;
identify a capacitance between the first surface and the second surface, based on the changed transmission channel and the second reception channel; and
in case that the capacitance between the first surface and the second surface is greater than or equal to a designated capacitance, control the electronic device to operate in a folded state.

2. The electronic device of claim 1, wherein, in case that the capacitance between the first surface and the second surface is less than the designated capacitance, the electronic device is controlled to operate in the unfolded state.

3. The electronic device of claim 1, wherein the touch panel is a capacitive touch panel comprising a plurality of sensing electrodes, and
wherein the first reception channel and the second reception channel are arranged in a y-axis direction or a horizontal direction of the touch panel, and transmit detection signals of the plurality of sensing electrodes to the processor.

4. The electronic device of claim 3, wherein the first transmission channel and the second transmission channel are arranged in an x-axis direction or a vertical direction of the touch panel, and transmit driving signals from the processor to the plurality of sensing electrodes.

5. The electronic device of claim 1, wherein the designated cycle varies depending on a power mode of the electronic device,
wherein the power mode comprises one of a normal power mode, a low power mode, or a deep sleep mode, and
wherein the deep sleep mode comprises power operation in the folded state of the electronic device.

6. The electronic device of claim 1, wherein the instructions, when executed by the processor, cause the electronic device to:
while the electronic device operates in the folded state, control the first reception channel to be changed into the transmission channel at the designated cycle;
identify the capacitance between the first surface and the second surface, based on the changed transmission channel and the second reception channel; and
in case that the capacitance between the first surface and the second surface is less than the designated capacitance, control the electronic device to operate in the unfolded state.

7. The electronic device of claim 1, wherein the capacitance between the first surface and the second surface is proportional to a distance between the first surface and the second surface or an angle between the first surface and the second surface.

8. A method for identifying a folded state or an unfolded state of an electronic device, the method comprising:
controlling the electronic device to operate in an unfolded state;
controlling a first reception channel of a touch panel corresponding to a first housing comprising a first surface facing in a first direction to be changed into a transmission channel at a designated cycle;
identifying a capacitance between the first surface and the second surface, based on the changed transmission channel and a second reception channel of the touch panel corresponding to a second housing comprising a second surface facing in a second direction; and
in case that the capacitance between the first surface and the second surface is greater than or equal to a designated capacitance, controlling the electronic device to operate in a folded state.

9. The method of claim 8, comprising, in case that the capacitance between the first surface and the second surface is less than the designated capacitance, controlling the electronic device to operate in the unfolded state.

10. The method of claim 8, wherein the touch panel is a capacitive touch panel comprising a plurality of sensing electrodes.

11. The method of claim 10, wherein the first reception channel and the second reception channel are arranged in a y-axis direction or a horizontal direction of the touch panel, and the method comprises transmitting detection signals of the plurality of sensing electrodes to a processor.

12. The method of claim 10, wherein the first transmission channel and the second transmission channel are arranged in an x-axis direction or a vertical direction of the touch panel, and the method comprises transmitting driving signals from a processor to the plurality of sensing electrodes.

13. The method of claim 8, wherein the designated cycle varies depending on a power mode of the electronic device,
wherein the power mode comprises one of a normal power mode, a low power mode, or a deep sleep mode, and
wherein the deep sleep mode comprises power operation in the folded state of the electronic device.

14. The method of claim 8, comprising:
while the electronic device operates in the folded state, changing the first reception channel to the transmission channel at the designated cycle;
identifying the capacitance between the first surface and the second surface, based on the changed transmission channel and the second reception channel; and
in case that the capacitance between the first surface and the second surface is less than the designated capacitance, controlling the electronic device to operate in the unfolded state.

15. The method of claim 8, wherein the capacitance between the first surface and the second surface is proportional to a distance between the first surface and the second surface or an angle between the first surface and the second surface.
